# EUROPÄISCHE PATENTSCHRIFT

(11) **EP 1 154 535 B1**
(45) Veröffentlichungstag und Bekanntmachung des Hinweises auf die Patenterteilung: **14.07.2010**
(21) Anmeldenummer: 01110605.1
(22) Anmeldetag: 30.04.2001
(51) Int. Cl.: H02G 5/00

(54) **Sammelschienensystem zur elektrischen Leistungsübertragung in magnetisch streufeldarmer Ausführung**
Busbar system for electrical power transmission in magnetic low leakage implementation
Système de barres omnibus pour transmission de puissance électrique avec faible champ de dispersion magnétique

(30) Priorität: 12.05.2000 DE 20008567 U
(43) Veröffentlichungstag der Anmeldung: 14.11.2001
(73) Patentinhaber: SIEMENS AKTIENGESELLSCHAFT, 80333 München (DE)
(72) Erfinder: Kitzel, Hans-Peter, 90427 Nuernberg (DE); Preiss, Manfred, 91058 Erlangen (DE); Wengler, Peter, 91058 Erlangen (DE)

(56) Entgegenhaltungen:
- DE-U- 9 015 949
- US-A- 2 269 233

## Beschreibung

Die vorliegende Erfindung betrifft eine Sammelschiene zur elektrischen Leistungsübertragung mit einem im wesentlichen röhrenförmigen Außenleiter und einem im wesentlichen koaxial zu diesem angeordneten Innenleiter.

Eine derartige Sammelschiene ist beispielsweise bekannt aus dem DE-GM 90 15 949, welche einen Außenleiter in Form eines geschlitzten, zylindrischen Rohres offenbart, in dessen Mitte ein Innenleiter, ebenfalls mit einem kreisförmigen Querschnitt, koaxial angeordnet ist. Am Innenleiter befestigte Anschlüsse aus Flachmaterial durchragen den Außenleiter im Bereich der Schlitze. Diese vorbekannte Sammelschiene ist vibrationsfest und insbesondere magnetisch streufeldarm. Insbesondere hat sich die Beschaffung der für dessen Herstellung benötigten Materialien als problematisch erwiesen. Darüber hinaus ist die Fertigung überaus aufwendig.

Die US-A-2,269,233 offenbart ein Sammelschienensystem gemäß Oberbegriff des Patentanspruchs 1, bei dem sowohl der Innenleiter als auch der Außenleiter aus zwei Profilschienen mit offenem Querschnitt gebildet sind. Die elektrische Kontaktierung des Außenleiters erfolgt hierbei mittels einer Schraube an einer ersten der beiden Profilschienen des Außenleiters. Über diese Schraube sind die beiden Profilschienen des Außenleiters zueinander und gegenüber den Profilschienen des Innenleiters fixiert. Außerdem erfolgt über diese Schraube die Stromübertragung von der ersten zu der zweiten Profilschiene des Außenleiters.

Insbesondere im Einsatzbereich auf modernen U-Booten werden Schaltanlagen und Verkabelungen in besonders magnetisch streufeldarmer Ausführung vorgeschrieben. Das Hauptnetz wird bei konventionellen diesel-elektrischen U-Booten üblicherweise von der Batterie gespeist. Wegen der Forderung nach besonders niedrigen magnetisch Streufeldwerten bedarf es einer speziellen Verschienung der Hauptschalttafel.

Ausgehend vom vorbeschriebenen Stand der Technik liegt der vorliegenden Erfindung die Aufgabe zugrunde, eine Sammelschiene der gattungsgemäßen Art dahingehend weiterzubilden, dass die für deren Herstellung erforderlichen Materialien einfach beschaffbar sind und insbesondere die Montage erheblich vereinfacht ist, wobei keinerlei Einbußen in Bezug auf die magnetischen Streufeldwerte sowie die Schock- und Kurzschlussfestigkeit in Kauf genommen werden müssen und diese sogar verbessert werden können.

Zur technischen Lösung wird ein Sammelschienensystem gemäß Patentanspruch 1 vorgeschlagen.

In erfindungsgemäßer Weise können Profilschienen mit offenem, ansonsten aber geradezu beliebigem Querschnitt verwendet werden, also mit halbkreisförmigen Querschnitten, eckigen, aber offenen Querschnitten und dergleichen. Derartige Profilschienen können dann abgelängt und jeweils mit offenem Querschnitt zueinander weisend verbunden werden, um auf diese Weise einfach einen Außenleiter zu bilden. Dabei kann auf handelsübliches Halbzeug zurückgegriffen werden, oder es können, wenn Fertigungstechnik dies sinnvoll machen, entsprechende Halbprofile durch abkanten oder dergleichen gebildet werden. Ein besonderer Vorteil ergibt sich auch in der Möglichkeit Vor-Ort-Reparaturen oder dergleichen vorzunehmen.

In vorteilhafter Weise haben die Profilschienen einen U-förmigen Querschnitt und sind gemäß einem Vorschlag der Erfindung abgekantete Bleche. Die Fertigung ist dadurch sehr einfach ebenso wie die Montage. Außerdem haben sich besonders niedrige magnetisch Streufeldwerte ergeben.

Die Profilschienen werden ein Hohlprofil bildend aufeinander gelegt, so dass die freien Längsseitenkanten zueinander weisen. Sie werden dann mittels Anschlussstücken verbunden. Erfindungsgemäß werden Anschlussstücke mit T-förmigem Querschnitt verwendet, bei welchen je ein Schenkel des T-Balkens an einer der Profilschienen befestigt ist, während der vertikale T-Schenkel vorzugsweise als Befestigungs- und Anschlussstück dient. In fertigungstechnisch einfacher Weise können die Verbindungen Schraubverbindungen sein. Aber auch alle anderen Verbindungsarten wie Hartlöten und dergleichen kommen in Frage.

Erfindungsgemäß ist der Innenleiter als Flachteil ausgeführt. Dies ist beschaffungstechnisch und fertigungstechnisch denkbar einfach. Das Flachteil weist erfindungsgemäß quer zur Längsmittelachse abstehende Befestigungs- und Kontaktzonen auf. Derartige Flachteile können beispielsweise aus Blechen gestanzt werden.

Mit besonderem Vorteil wird vorgeschlagen, dass die Sammelschiene aus Kupferelementen gebildet ist. Selbst die Anschlussstücke können aus Kupferflachteilen hergestellt werden.

Außenleiter und Innenleiter sind zueinander elektrisch isoliert und relativ zueinander hinsichtlich der Position fixiert.

Ein weiterer Vorteil der Erfindung ergibt sich aus der Möglichkeit, die Kontakt- und Anschlussstücke hinsichtlich des Ortes sehr variabel zu positionieren, so dass auch bauliche Bedingungen vor Ort berücksichtigt werden können.

Mit der Erfindung wird ein Sammelschienensystem vorgeschlagen, welches hinsichtlich der Materialbeschaffung keinerlei Probleme aufweist. Darüber hinaus sind die Außenleiter und die Innenleiter fertigungstechnisch und montagetechnisch einfach und lassen sich im Hinblick auf niedrige magnetisch Streufeldwerte herstellen und montieren.

Weitere Vorteile und Merkmale der Erfindung ergeben sich aus der folgenden Beschreibung anhand der Figuren. Dabei zeigen:

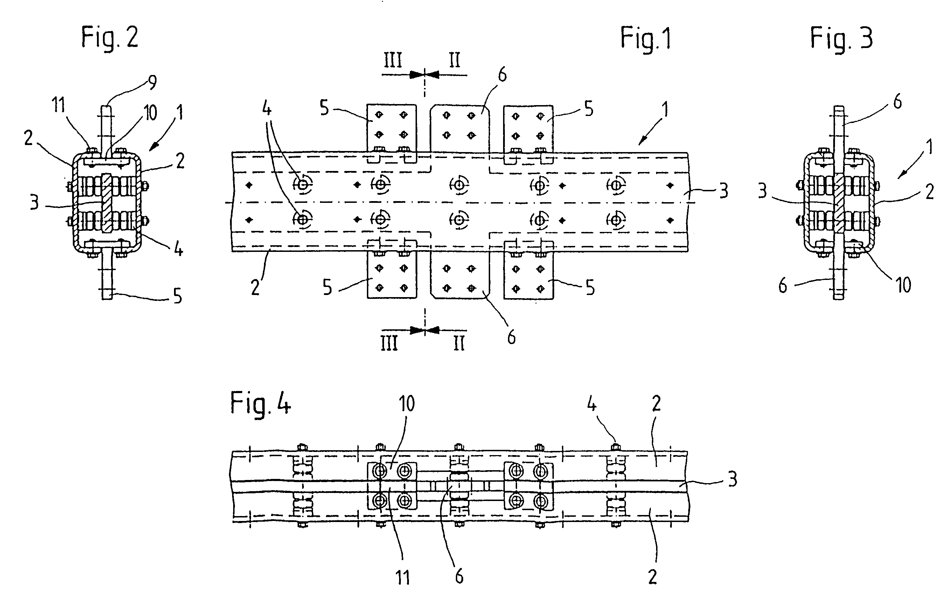

- FIG 1: eine Ansicht auf ein Stück eines Ausführungsbeispie- les einer Sammelschiene;
- FIG 2: einen Schnitt entlang der Linie II-II gemäß FIG 1;
- FIG 3: einen Schnitt gemäß der Linie III-III gemäß FIG 1 und
- FIG 4: eine Seitenansicht gemäß FIG.1.

In den Figuren sind für gleiche Elemente die gleichen Bezugszeichen verwendet.

Die Sammelschiene 1 besteht aus den Außenleitern 2 und einem Innenleiter 3, die mittels eines Schrauben-/Isolatorensystems 4 relativ zueinander fixiert sind. Die Außenleiter 2 bestehen aus zwei Profilschienen mit offenem Querschnitt, im gezeigten Ausführungsbeispiel mit einem U-förmigen Querschnitt. Diese sind durch Anschlussstücke 5 verbunden und befestigbar. Die Anschlussstücke 5 haben einen T-förmigen Querschnitt. Der T-Balken 10 ist im gezeigten Ausführungsbeispiel aus Platzgründen im Inneren der Profilschiene angeordnet und mittels Schrauben 11 mit beiden Profilschienen verschraubt. Der T-Schenkel 9 ragt aus den Profilschienen heraus und dient der Befestigung und Kontaktierung.

Diese Art der Befestigung ermöglicht die freie Positionierung der Anschlussstücke 5 über die Länge. Dabei kann man Stabilitätsgesichtspunkte und bauliche Randbedingungen vor Ort berücksichtigen.

Der als Flachteil ausgebildete Innenleiter 3 hat stellenweise quer zu Längsmittelachse abstehende Anschlussschenkel 6, die elektrisch isoliert den Schlitz zwischen den beiden den Außenleiter bildenden Profilschienen 2 durchragen und der Kontaktierung und Befestigung dienen.

Sämtliche Elemente können aus Kupfer gebildet sein, wobei das Flachteil ein Stanzteil ist. Im Rahmen der Erfindung können an dem Innenleiter 3 auch seitlich herausragende Anschlussstücke mittels Schrauben oder dergleichen befestigt sein, wenn ein Ausstanzen nicht möglich ist.

Das beschriebene Ausführungsbeispiel dient nur der Erläuterung und ist nicht beschränkend.

## Patentansprüche

1. Magnetisch streufeldarmes Sammelschienensystem (1) zur elektrischen Leistungsübertragung mit einem im wesentlichen röhrenförmigen Außenleiter (2) und einem im wesentlichen koaxial zu diesem angeordneten Innenleiter (3), wobei der Außenleiter (2) aus zwei Profilschienen mit offenem Querschnitt gebildet ist,
**dadurch gekennzeichnet , dass** die Profilschienen mittels Anschlussstücken (5) mit T-förmigem Querschnitt verbunden sind, bei welchen je ein Schenkel (9) des T-Balkens (10) an einer der Profilschienen befestigt ist, wobei der Innenleiter (3) ein Flachteil ist und wobei das Flachteil quer zur Längsmittelachse verlaufende Stege (6) aufweist, die aus dem Außenleiter (2) herausragen.

2. Sammelschiene (1) nach Anspruch 1,
**dadurch gekennzeichnet , dass** die Profilschienen einen U-förmigen Querschnitt aufweisen.

3. Sammelschiene (1) nach einem der vorhergehenden Ansprüche, **dadurch gekennzeichnet, dass** die Profilschienen aus gekanteten Blechen gebildet sind.

4. Sammelschiene (1) nach Anspruch 1,
**dadurch gekennzeichnet, dass** die Verbindungen als Schraubverbindungen ausgebildet sind.

5. Sammelschiene (1) nach einem der vorhergehenden Ansprüche, **dadurch gekennzeichnet , dass** die Anschlussstücke (5) variabel an den Profilschienen positionierbar sind.

6. Sammelschiene (1) nach einem der vorhergehenden Ansprüche, **dadurch gekennzeichnet , dass** die Leiter (2,3) kurzschlussfest relativ zueinander fixiert sind.

7. Sammelschiene (1) nach einem der vorhergehenden Ansprüche, **dadurch gekennzeichnet , dass** zwischen den Leitern (2,3) Spalte verbleiben, durch welche Kühlluft führbar ist.

## Claims

1. Busbar system (1) for electrical power transmission in magnetic low stray field implementation, with an essentially tubular outer conductor (2) and an inner conductor (3) arranged essentially coaxially to this, with the outer conductor (2) being formed by two profile rails with an open cross section,
**characterised in that** the profile rails are joined by means of connecting pieces (5) with a T-shaped cross section, in which one limb (9) of the T-bar (10) in each case is attached to one of the profile rails, with the inner conductor (3) being a flat section and with the flat section featuring webs (6) running transverse to the central longitudinal axis, which protrude from the outer conductor (2).

2. Busbar (1) according to claim 1,
**characterised in that** the profile rails have a U-shaped cross section.

3. Busbar (1) according to one of the previous claims, **characterised in that** the profile rails are formed from angled sheets of metal.

4. Busbar (1) according to claim 1,
**characterised in that** the connections are embodied as screw connections.

5. Busbar (1) according to one of the previous claims, **characterised in that** the connecting pieces (5) are able to be positioned variably on the profile rails.

6. Busbar (1) according to one of the previous claims, **characterised in that** the conductors (2, 3) are fixed short-circuit proof in relation to each other.

7. Busbar (1) according to one of the previous claims, **characterised in that** gaps remain between the conductors (2, 3) through which cold air is able to be fed.

## Revendications

1. Système ( 1 ) de barres omnibus à faible champ de dispersion magnétique pour transmettre de la puissance électrique, comprenant un conducteur (2) extérieur sensiblement tubulaire et un conducteur (3) intérieur disposé sensiblement coaxialement à celui-ci, le conducteur ( 2 ) extérieur étant formé de deux barres profilées de section transversale ouvertes,
**caractérisé en ce que** les barres profilées sont reliées au moyen de pièces ( 5 ) de raccordement de section transversale en forme de T, pour lesquelles respectivement une branche ( 9 ) de la barre ( 10 ) du T est fixée à l'une des barres profilées, le conducteur (3) intérieur étant une partie plate, et la partie plate ayant des réglettes ( 6 ) qui s'étendent transversalement à l'axe médian longitudinal et qui font saillie du conducteur ( 2 ) extérieur.

2. Barre ( 1 ) omnibus suivant la revendication 1, **caractérisée en ce que** les barres profilées ont une section transversale en forme de U.

3. Barre ( 1 ) profilée suivant l'une des revendications précédentes, **caractérisée en ce que** les barres profilées sont formées de tôles pliées.

4. Barre suivant la revendication 1,
**caractérisée en ce que** les liaisons sont constituées sous la forme de vissages.

5. Barre suivant l'une des revendications précédentes, **caractérisée en ce que** les pièces (5) de raccordement peuvent être mises en position de manière variable sur les barres profilées.

6. Barre suivant l'une des revendications précédentes, **caractérisée en ce que** les conducteurs ( 2, 3 ) sont immobilisés l'un par rapport à l'autre de manière à résister au court-circuit.

7. Barre suivant l'une des revendications précédentes, **caractérisée en ce qu'**il subsiste entre les conducteurs ( 2, 3 ) des intervalles par lesquels de l'air de refroidissement peut passer.
